**Europäisches Patentamt**

**European Patent Office**

**Office européen des brevets**

(11) Veröffentlichungsnummer: **0 206 122**
**B1**

(12) **EUROPÄISCHE PATENTSCHRIFT**

(45) Veröffentlichungstag der Patentschrift:
24.05.89

(21) Anmeldenummer: 86107976.2

(22) Anmeldetag: 11.06.86

(51) Int. Cl.⁴: **F 16 D 33/06**

(54) Hydrodynamische Kupplung.

(30) Priorität: **21.06.85 DE 3522174**

(43) Veröffentlichungstag der Anmeldung:
**30.12.86 Patentblatt 86/52**

(45) Bekanntmachung des Hinweises auf die Patenterteilung:
**24.05.89 Patentblatt 89/21**

(84) Benannte Vertragsstaaten:
**AT BE FR GB IT NL**

(56) Entgegenhaltungen:
**DE-A- 3 240 334**
**DE-B- 1 202 592**
**DE-C- 3 231 368**
**DE-C- 3 329 854**
**FR-A- 1 145 434**
**GB-A- 765 667**
**GB-A- 2 011 039**
**US-A- 2 783 615**
**US-A- 3 237 409**

(73) Patentinhaber: **VOITH TURBO GMBH & CO. KG,
Voithstrasse 1, D-7180 Crailsheim (DE)**

(72) Erfinder: **Höller, Heinz, Wilhelm-von-Ketteler-Strasse 29,
D-7180 Crailsheim (DE)**

(74) Vertreter: **Weitzel, Wolfgang, Dr.-Ing., St. Pöltener
Strasse 43, D-7920 Heidenheim (DE)**

## Beschreibung

*Technisches Gebiet*

Die Erfindung betrifft eine hydrodynamische Kupplung mit den im Oberbegriff des Anspruches 1 angegebenen Merkmalen. Eine solche Kupplung dient zur Kraftübertragung von einem Antriebsmotor zu einer Arbeitsmaschine. Vorzugsweise handelt es sich um Arbeitsmaschinen, die eine große Masse aufweisen oder die große Massen fördern, z.B. Förderbänder. Mit der hydrodynamischen Kupplung wird erreicht, daß der Antriebsmotor unter nur geringer Last anlaufen kann. Erst wenn der Antriebsmotor seine Nenndrehzahl erreicht — oder sogar erst nachdem er diese erreicht hat — wird die Arbeitsmaschine in Bewegung gesetzt. Während des Anlaufvorganges der Arbeitsmaschine begrenzt die hydrodynamische Kupplung das durch sie übertragene Drehmoment selbsttätig auf einen bestimmten Wert, so daß der Antriebsmotor und die Arbeitsmaschine geschont werden.

Die Erfindung betrifft ausschließlich hydrodynamische Kupplungen derjenigen Bauart, welche mit einer gleichbleibenden Menge an Arbeitsflüssigkeit betrieben werden. Das heißt im Stillstand der Kupplung wird ihr Innenraum mit einer bestimmten Arbeitsflüssigkeitsmenge gefüllt, die während des Betriebes unverändert bleibt. Jedoch hat die Kupplung außer dem beschaufelten Arbeitsraum wenigstens eine mit dem Primärrad rotierende Verzögerungskammer. In dieser sammelt sich insbesondere beim Stillstand der Kupplung ein Teil der Arbeitsflüssigkeit. Durch diese Konstruktion wird erreicht, daß der beschaufelte Arbeitsraum zu Beginn des Anfahrvorganges nur teilweise mit Arbeitsflüssigkeit gefüllt ist und daß der Füllungsgrad im Arbeitsraum nur allmählich den höchstmöglichen Wert annimmt. Man könnte sagen, es handelt sich um eine Kupplung mit innerer Beeinflussung des Arbeitsraum-Füllungsgrades. Daneben gibt es hydrodynamische Kupplungen mit äußerer Beeinflussung des Arbeitsraum-Füllungsgrades, z.B. mit Hilfe eines Schöpfrohres. Kupplungen dieser Art können ähnliche Eigenschaften aufweisen. Der zusätzliche Aufwand für die Einrichtung zur äußeren Beeinflussung lohnt sich jedoch meistens nur im Falle sehr hoher Leistungsdichte.

*Stand der Technik*

1) DE-B 1 202 592
2) DE-C 3 231 368
3) DE-C 3 240 334
4) DE-C 3 329 854

Die aus der Druckschrift 1 bekannte hydrodynamische Kupplung hat zwei Verzögerungskammern, die — zwecks symmetrischer Ausbildung der Kupplung — an den Rückseiten der beiden Schaufelräder angeordnet sind. Die beiden Verzögerungskammern befinden sich überwiegend in verhältnismäßig geringem Abstand von der Kupplungsdrehachse. Etwa im radial mittleren Bereich des Arbeitsraumes sind in beiden Schaufelrädern Überströmkanäle vorgesehen, welche die Verzögerungskammern mit dem Arbeitsraum verbinden. Die eine der beiden Verzögerungskammern ist außerdem über den äußeren, zwischen den Schaufelrädern vorhandenen Ringspalt mit dem Arbeitsraum verbunden.

Aus den Druckschriften 2 und 3 sind hydrodynamische Kupplungen bekannt mit jeweils nur einer einzigen Verzögerungskammer. Gemäß diesen Druckschriften kann das durch die Kupplung während des Anfahrvorganges übertragene Drehmoment um so weiter verringert werden, je größer das Volumen der Verzögerungskammer ist. Man kann also durch Vergrößern der Verzögerungskammer das Kupplungs-Drehmoment beim Anfahren innerhalb gewisser Grenzen verhältnismäßig niedrig halten. Mit zusätzlichen, in der Druckschrift 2 beschriebenen Maßnahmen kann außerdem erreicht werden, daß während eines Anfahrvorganges das Kupplungs-Drehmoment, nach einem anfänglichen steilen parabelförmigen Anstieg bis etwa zur Hälfte des Maximalwertes, verhältnismäßig langsam bis zum Maximalwert ansteigt. Somit wird das maximale Kupplungs-Drehmoment in vorteilhafter Weise verhältnismäßig spät erreicht.

Die vorbeschriebenen bekannten Maßnahmen waren somit Schritte in die richtige Richtung. Nun zeigt sich jedoch beim Betrieb besonders schwer anlaufender Arbeitsmaschinen, insbesondere bei Förderbändern, daß beim Anlaufvorgang der Aufbau des Kupplungs-Drehmomentes immer noch zu rasch erfolgt. Beispielsweise beim Anfahren eines schweren Förderbandes entsteht in diesem ein Kraftstoß, der die Lebensdauer des Förderbandes herabsetzt.

*Darstellung der Erfindung*

Der Erfindung liegt die Aufgabe zugrunde, die bekannten hydrodynamischen Kupplungen derart zu verbessern, daß beim Anlaufvorgang der Anstieg des Kupplungs-Drehmomentes noch langsamer erfolgt als bisher, insbesondere verglichen mit dem Gegenstand der Druckschrift 2.

Diese Aufgabe wird durch die Merkmale des Patentanspruchs 1 gelöst.

Die Erfindung geht aus von der aus Druckschrift 1 bekannten hydrodynamischen Kupplung mit zwei Verzögerungskammern. Abweichend von Druckschrift 1 ist erfindungsgemäß vorgesehen, daß zumindest 10 Prozent des Volumens einer der beiden Verzögerungskammern in einem größeren Abstand von der Kupplungsachse angeordnet ist als die radial äußere Begrenzung des Arbeitsraumes. Hierdurch wird folgendes erreicht: Zu Beginn des Anlaufvorganges wird der Flüssigkeitsanteil, der sich beim Stillstand im Arbeitsraum angesammelt hat, vollkommen oder zumindest nahezu vollkommen in die zweite, radial äußere Verzögerungskammer abgeführt. Dies erfolgt innerhalb kürzester Zeit, ja geradezu schlagartig, weil die Verbindung vom Arbeitsraum zu der äußeren Verzögerungskammer — vorzugsweise in Form des äußeren Ringspaltes zwischen den beiden Schaufelrädern — einen sehr großen Strömungsquerschnitt aufweist. Wesentlich ist nun, daß der in die äußere Verzögerungskammer abgeführte Flüssigkeitsanteil während der gesamten Betriebsdauer bis zum nächsten Stillstand in dieser äußeren Verzögerungskammer verbleibt. Somit wird der Arbeitsraum während des Anfahrvorganges nur aus der ersten radial innen angeordneten Verzögerungskammer allmählich gefüllt. Mit anderen Worten: Durch die Erfindung gelingt es, daß der Arbeitsraum während des Anfahrvorganges für eine gewisse Zeit, beispielsweise 3 bis 5 Sekunden weitgehend oder sogar vollkommen entleert ist. Dies hat zur Folge, daß beim Einschalten der Antriebsmaschine der parabelförmige Anstieg des Kupplungs-Drehmomentes zum einen auf einer flacheren Parabel als bisher und zum anderen auf eine geringere Höhe als bisher erfolgt. Insgesamt findet also eine gegenüber bisher wesentlich gleichmäßigere und zumindest im Anfangsbereich wesentlich langsamere Entwicklung des Kupplungs-Drehmomentes statt.

In der Druckschrift 3 ist eine hydrodynamische Kupplung beschrieben, bei der ebenfalls Maßnahmen zum zeitweisen vollkommenen Entleeren des Arbeitsraumes getroffen sind. Dort soll jedoch etwas ganz anderes erreicht werden als mit der hier vorliegenden Erfindung. Es wird dort nämlich angestrebt, daß sich die Kupplung bei einer Verminderung der Primärdrehzahl, z.B. auf die Motorleerlaufdrehzahl, möglichst vollkommen entleert, so daß das Kupplungs-Drehmoment soweit wie möglich reduziert wird. Dieses verminderte Kupplungs-Drehmoment soll dort bestehen bleiben, solange die Primärseite mit der verminderten Drehzahl umläuft. Bei der hier vorliegenden Erfindung geht es dagegen ausschließlich um ein kurzzeitiges Entleeren des Arbeitsraumes während des Anlaufvorganges.

Das Anordnen eines Flüssigkeitsraumes, dessen Volumen überwiegend radial außerhalb der radial äußeren Begrenzung des Arbeitsraumes liegt, ist zwar schon aus der Druckschrift 4 bekannt. Diese Flüssigkeitskammer ist jedoch als mit Druckluft beaufschlagbarer Vorratsbehälter ausgebildet, der mit dem Arbeitsraum nur über wenigstens eine Füll- und Entleerleitung in Verbindung steht. Es handelt sich dort also um eine hydrodynamische Kupplung der Gattung mit äußerer Beeinflussung des Arbeitsraum-Füllungsgrades.

*Kurze Beschreibung der Zeichnungen*

Die Fig. 1 ist ein Längsschnitt durch eine hydrodynamische Kupplung gemäß der Erfindung.

Die Fig. 2 ist ein Teil-Längsschnitt durch eine Kupplung, die gegenüber der Figur 1 abgewandelt ist.

Die Fig. 3a, 3b und 3c zeigen je eine, gegenüber der Fig. 1 wiederum geringfügig abgewandelte Kupplung in drei verschiedenen Betriebszuständen.

Die Fig. 4 zeigt in Diagramm-Form die Eigenschaften der erfindungsgemäßen Kupplung.

*Wege zur Ausführung der Erfindung*

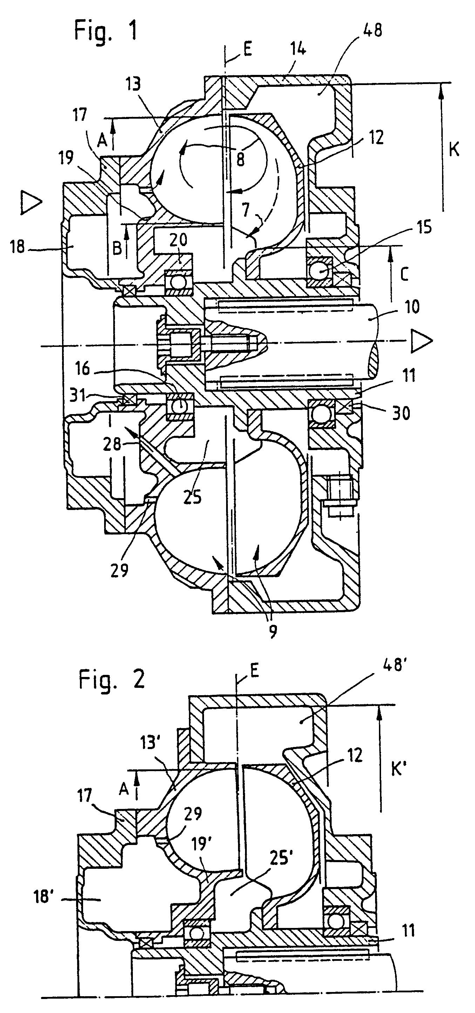

Die in Fig. 1 dargestellte hydrodynamische Kupplung hat eine Abtriebswelle 10, auf der die Nabe 11 des Sekundär-Schaufelrades 12 befestigt ist. Das Primär-Schaufelrad 13 ist gemeinsam mit der daran befestigten Kupplungsschale 14 mit Hilfe von Wälzlagern 15 und 16 auf der Nabe 11 drehbar gelagert. An der Außenseite des Primär-Schaufelrades 13 ist eine Antriebsschale 17 befestigt, die eine erste Verzögerungskammer 18 begrenzt. Die Antriebsschale 17 kann mit einer nicht dargestellten Antriebswelle verbunden werden.

Der (für beide Schaufelräder 12 und 13 gleich große) Außendurchmesser der Beschaufelung ist mit A bezeichnet, der Innendurchmesser der Beschaufelung des Primärrades mit B und der Innendurchmesser der Beschaufelung des Sekundärrades mit C. Das Verhältnis B/A beträgt etwa 0,55, das Verhältnis C/A dagegen etwa 0,42. Diese unterschiedlichen Maßverhältnisse sind jedoch für die Erfindung ohne Bedeutung. Die beiden Innendurchmesser B und C könnten auch gleich groß sein. Die radiale Mittelebene der Kupplung, die entlang dem Spalt zwischen den Schaufelrädern verläuft, ist mit E bezeichnet.

Das Primär-Schaufelrad 13 hat eine Radscheibe 19 mit einer daran angeformten Radnabe 20. Die Radscheibe 19 befindet sich in einem verhältnismäßig großen Abstand von der Mittelebene E und begrenzt einen schaufelfreien, radial innerhalb der Primärbeschaufelung angeordneten Stauraum 25. Auch dieser Stauraum ist nicht erfindungswesentlich; er kann entfallen, insbesondere wenn die beiden vorgenannten Innendurchmesser B und C gleich sind. Er unterstützt aber das Vermindern des Kupplungs-Drehmomentes bei großem Schlupf, z.B. beim Anfahren.

Die Radscheibe 19 des Primär-Schaufelrades 13 hat in der Regel keine Öffnungen, Bohrungen oder dergleichen, so daß keine direkte Leitungsverbindung vom Stauraum 25 zur ersten Verzögerungskammer 18 besteht.

Der von den beiden Schaufelrädern 12 und 13 gebildete Arbeitsraum ist mit 9 bezeichnet. Sein radial innerer Bereich steht über Kanäle 28, die durch die Radscheibe 19 hindurchgeführt sind, mit dem radial inneren Bereich der ersten Verzögerungskammer 18 in Verbindung. Hierdurch wird erreicht, daß durch diese Kanäle 28 nur ein Übertritt von Flüssigkeit aus dem Arbeitsraum 9 in die erste Verzögerungskammer 18 stattfindet, und zwar beim Stillstand der Kupplung. Die Flüssigkeit kann dann beim Wieder-Anfahren nur über Drosselbohrungen 29 aus der ersten Verzögerungskammer 18 in den Arbeitsraum 9 zurückströmen. Damit sich der Arbeitsraum 9 beim Beginn des Anfahr-Vorganges vorübergehend entleeren kann, ist die Schale 14 derart geformt, daß sie eine äußere Ringkammer 48 bildet; diese hat die Funktion einer zweiten Verzögerungskammer und ist ständig über den von den beiden Schaufelrädern 12 und 13 gebildeten äußeren Ringspalt mit dem Arbeitsraum 9 verbunden. Dieser Ringspalt stellt im allgemeinen einen ausreichend großen Strömungsquerschnitt für die Verbindung vom Arbeitsraum 9 zur Ringkammer 48 dar. Bei Bedarf können aber zusätzlich oder anstelle des Ringspaltes Öffnungen in wenigstens einem der Schaufelräder vorgesehen werden.

Der Innendurchmesser K der Ringkammer 48 ist beträchtlich größer als der Außendurchmesser A der Beschaufelung. Somit befindet sich das Volumen der Ringkammer überwiegend radial außerhalb des Arbeitsraumes. Die Ringkammer 48 kann somit beim Anfahren zumindest einen wesentlichen Teil derjenigen Arbeitsflüssigkeit aufnehmen, die sich beim Stillstand im Arbeitsraum angesammelt hat.

Im normalen Betrieb, d.h. wenn die anzutreibende Arbeitsmaschine mit ihrer normalen Geschwindigkeit läuft, arbeitet die Kupplung mit nur geringem Schlupf. Die sich hierbei einstellende Torusströmung ist durch die Pfeile 8 gekennzeichnet. Die Pfeile 7 stellen dagegen die Strömung dar, die sich bei großem Schlupf im Sekundär-Schaufelrad 12 einstellt. Zur Abdichtung des Kupplungs-Innenraumes nach außen sind auf der Außenseite der Wälzlager 15 und 16 Dichtungsringe 30, 31 vorgesehen.

Das in Fig. 2 dargestellte Ausführungsbeispiel unterscheidet sich von dem in der Fig. 1 gezeigten durch die folgenden Merkmale: Das Primär-Schaufelrad 13' hat eine nunmehr in geringerem Abstand von der Mittelebene E angeordnete Radscheibe 19'. Dadurch werden der Stauraum 25' kleiner und die erste Verzögerungskammer 18' größer als in Fig. 1.

Ein anderer Unterschied ist der folgende: Während in Fig. 1 die äußere Ringkammer 48 ausschließlich auf der einen Seite der Mittelebene E angeordnet ist, so daß die Ringkammer ausschließlich das Sekundärschaufelrad 12 umhüllt, zeigt die Fig. 2, daß hiervon auch abgewichen werden kann. Hier erstreckt sich die äußere Ringkammer 48' in axialer Richtung zu beiden Seiten der Mittelebene E. Außerdem ist ihr Innendurchmeser K' noch etwas größer als in Fig. 1. Hierdurch kann diese zweite Verzögerungskammer 48' mit noch größerer Sicherheit während des Anfahrvorganges die gesamte, beim Stillstand im Arbeitsraum 9 befindliche Arbeitsflüssigkeit aufnehmen. Abweichend von den Fig. 1 und 2 könnte die äußere Ringkammer auch vollkommen auf der linken Seite der Mittelebene E angeordnet sein, so daß sie ausschließlich das Primärschaufelrad 13 umhüllt. Letztes kann in diesem Fall einige Öffnungen mit großem Querschnitt aufweisen zur Verbindung des Arbeitsraumes mit der Ringkammer.

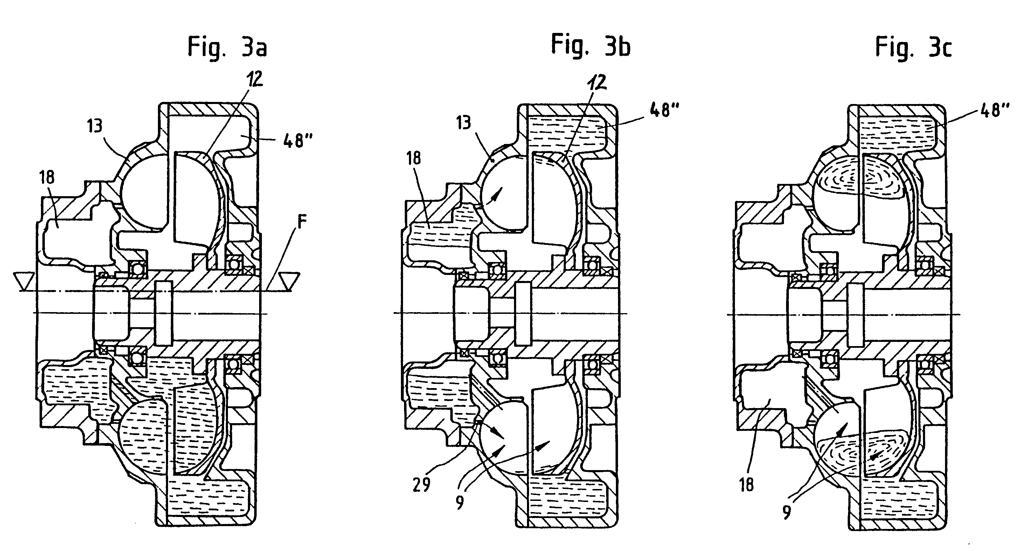

Die Fig. 3a zeigt eine erfindungsgemäße Kupplung im Stillstand. Etwas mehr als die Hälfte der Innenräume der Kupplung ist mit Arbeitsflüssigkeit gefüllt. Der Flüssigkeitsspiegel ist durch die Linie F angedeutet. Die zweite Verzögerungskammer 48'' umhüllt wie in Fig. 1 nur das Sekundärschaufelrad 12, ist aber im Durchmesser größer als in Fig. 1.

Die Fig. 3b zeigt den Moment, in dem das Primärschaufelrad 13 soeben angelaufen ist, das Sekundärschaufelrad 12 jedoch noch stillsteht. Die Arbeitsflüssigkeit hat sich ringförmig an die Außenwände der Verzögerungskammer 18 und 48'' angelegt. Der Arbeitsraum 9 hat sich nahezu vollkommen in die zweite Verzögerungskammer (äußere Ringkammer 48'') entleert. Jedoch beginnt gleichzeitig das Überströmen der Arbeitsflüssigkeit aus der ersten Verzögerungskammer 18 durch die Drosselbohrungen 29 in den Arbeitsraum 9.

Die Fig. 3c zeigt die Kupplung im normalen Betrieb, d.h. nach dem Ende des Anlaufvorganges. Die zuvor in der ersten Verzögerungskammer 18 befindliche Arbeitsflüssigkeit ist nun nahezu vollkommen in den Arbeitsraum 9 übergetreten. Die zweite Verzögerungskammer 48'' speichert nach wie vor denjenigen Teil der Arbeitsflüssigkeit, den sie beim Anfahren (Fig. 3b) aufgenommen hat.

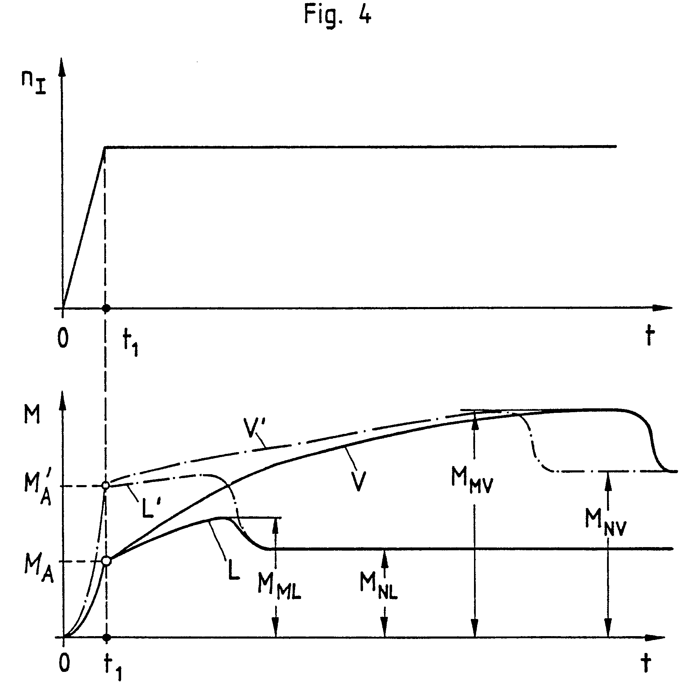

Die in Fig. 4 dargestellten Diagramme zeigen das Verhalten der erfindungsgemäßen Kupplung am Beispiel eines Förderband-Antriebes. Im oberen Teil der Fig. 4 ist zunächst die Primär-Drehzahl $n_I$ über der Zeit t aufgetragen. Es ist angenommen, daß die Antriebsmaschine bei $t = 0$ in Gang gesetzt wird. Man sieht, daß die Primär-Drehzahl sehr rasch (im Zeitpunkt $t_1$) ihren vollen Wert erreicht.

Im unteren Diagramm ist das Kupplungsmoment M über der Zeit t aufgetragen. Mit vollen Linien ist dargestellt, daß nach dem Ingangsetzen der Antriebsmaschine das Kupplungsmoment zunächst auf einer parabelförmigen Kurve ansteigt, und zwar bis zum Zeitpunkt $t_1$, wo die Primär-Drehzahl ihren vollen Wert erreicht.

In diesem Punkt ist das Kupplungsmoment erst auf einem ziemlich niedrigen Wert $M_A$ angelagt; danach steigt es entlang ziemlich flacher Kurven, und zwar bei beladenem Förderband entlang der Linie V bis zum Maximalwert $M_{MV}$ oder bei leerem Förderband entlang der noch flacheren Linie L bis zum Maximalwert $M_{ML}$. Jeweils nach dem Erreichen des Maximalwertes $M_{MV}$ bzw. $M_{ML}$ fällt die Momenten-Kennlinie ab auf das Antriebsmoment $M_{NV}$ bzw. $M_{NL}$, welches das volle bzw. leere Förderband bei seiner Nenn-Geschwindigkeit benötigt.

Mit strichpunktierten Linien sind die bisher erreichbaren Kennlinien-Verläufe V' bzw. L' dargestellt. Man sieht, daß bisher im Zeitpunkt $t_1$ (beim Erreichen der vollen Primärdrehzahl) das Kupplungsmoment $M_A$ nahezu doppelt so hoch war als bei der erfindungsgemäßen Kupplung.

## Patentansprüche

1. Hydrodynamische Kupplung mit den folgenden Merkmalen:

a) ein beschaufeltes Primärrad (13) und ein beschaufeltes Sekundärrad (12) begrenzen einen mit Arbeitsflüssigkeit füllbaren, torusförmigen Arbeitsraum (9);

b) mit dem Primärrad (13) rotiert eine Kupplungsschale (14), welche die Außenseite des Sekundärrades (12) umhüllt;

c) mit dem Primärrad (13) rotieren eine erste Verzögerungskammer (18) und eine zweite Verzögerungskammer (48), die beide mit dem Arbeitsraum (9) kommunizieren;

d) wenigstens ein, ungefähr im radial mittleren Bereich des Arbeitsraumes (9) angeordneter Überströmkanal (29) verbindet die erste Verzögerungskammer (18) mit dem Arbeitsraum (9);

dadurch gekennzeichnet, daß zumindest 10 Prozent des Volumens der zweiten Verzögerungskammer (48) in einem größeren Abstand von der Kupplungsachse angeordnet sind als die radial äußere Begrenzung (A) des Arbeitsraumes (9).

2. Kupplung nach Anspruch 1, dadurch gekennzeichnet, daß das Volumen des radial außerhalb der radial äußeren Begrenzung (A) des Arbeitsraumes (9) befindlichen Teils der zweiten Verzögerungskammer (48) zwischen 20 und 60 Prozent des Volumens des Arbeitsraumes (9) beträgt.

3. Kupplung nach Anspruch 1, dadurch gekennzeichnet, daß im wesentlichen das gesamte Volumen der zweiten Verzögerungskammer (48') sich radial außerhalb der radial äußeren Begrenzung (A) des Arbeitsraumes (9) befindet.

4. Kupplung nach einem der Ansprüche 1 bis 3, dadurch gekennzeichnet, daß der Arbeitsraum (9) — wie an sich bekannt — unmittelbar über den zwischen Primär- und Sekundärrad (12 und 13) vorhandenen radial äußeren Ringspalt mit der zweiten Verzögerungskammer (48) verbunden ist.

## Claims

1. Hydraulic coupling having the following features:

a) a bladed primary wheel (13) and a bladed secondary wheel (12) confining a torus-shaped operating space (9) which can be filled with an operating fluid;

b) a coupling shell (14) rotating common with said bladed primary wheel (13) and enveloping the exterior of the secondary bladed wheel (12);

c) rotating with said bladed primary wheel (13) are a first delay chamber (18) and a rotating second delay chamber (48), both communicating with the operating space (9);

d) a minimum of one overflow channel (29), approximately located radially to the centre of the operating space (9) connecting the first delay chamber (18) with the operating space (9);

characterized in that at least 10 percent of the volumetric capacity of the second delay chamber (48) is located at a greater distance from the coupling axis than the radial outer limitation (A) of the operating space (9).

2. Hydraulic coupling according to Claim 1, characterized by that part of the second delay chamber (48) located exterior to the radially outer limitation (A) of the operating space (9) having a volumetric capacity of 20 to 60 percent of the volumetric capacity of the operating space (9).

3. Hydraulic coupling according to Claim 1, characterized by the entire volumetric capacity of the second delay chamber (48') being essentially located exterior to the radially outer limitation (A) of the operating space (9).

4. Hydraulic coupling according to Claims 1 to 3, characterized by the operating space (9) being connected to the second delay chamber (48) by means of the radially outer annular gap existing between the primary and secondary bladed wheels (12 and 13).

## Revendications

1. Dispositif de couplage hydrodynamique présentant les caractéristiques suivantes:

a) une roue à aubes primaire (13) et une roue à aubes secondaire (12) délimitent une chambre de travail (9) en forme de tore et remplie d'un liquide de travail;

b) un carter du dispositif de couplage (14) est en rotation avec la roue primaire (13), lequel recouvre le côté extérieur de la roue secondaire (12);

c) une première chambre de ralentissement (18) et une seconde chambre de ralentissement (48) sont en rotation avec la roue primaire (13), toutes les deux communiquant avec une chambre de travail (9);

d) au moins un by-pass (29) disposé à peu près radialement dans la zone médiane de la chambre de travail (9) relie la première chambre de ralentissement (18) à la chambre de travail (9);

caractérisé: en ce qu'au moins 10% du volume de la seconde chambre de ralentissement (48) est situé au-delà, par rapport à l'axe, de la limite externe radiale (A) de la chambre de travail (9).

2. Dispositif de couplage selon la revendication 1, caractérisé en ce que le volume de la partie située radialement à l'extérieur de la limite radiale externe (A) de la chambre de travail (9) de la seconde chambre de ralentissement (48) représente entre 20 et 60% du volume de la chambre de travail (9).

3. Dispositif de couplage selon la revendication 1, caractérisé en ce que, substantiellement la totalité du volume de la seconde chambre de ralentissement (48') se trouve radialement à l'extérieur de la limite (A) radiale externe de la chambre de travail (9).

4. Dispositif de couplage selon l'une des revendications 1 à 3, caractérisé en ce que la chambre de travail (9) — comme cela est connu en soi — est reliée directement à la seconde chambre de ralentissement (48) par la fente annulaire extérieure présente radialement entre les roues primaire (12) et secondaire (13).

Fig. 1

Fig. 2

Fig. 3a

Fig. 3b

Fig. 3c

EP 0 206 122 B1

## Fig. 4